(19) Europäisches Patentamt / European Patent Office / Office européen des brevets

(11) **EP 3 150 082 B1**

(12) **EUROPEAN PATENT SPECIFICATION**

(45) Date of publication and mention
of the grant of the patent:
**18.04.2018 Bulletin 2018/16**

(51) Int Cl.:
***A46B 15/00*** *(2006.01)*

(21) Application number: **15187262.9**

(22) Date of filing: **29.09.2015**

(54) **METHOD AND DEVICE FOR QUANTIFYING A WEAR LEVEL OF A BRISTLE FIELD OF A BRUSH**

VERFAHREN UND VORRICHTUNG ZUR QUANTIFIZIERUNG EINES ABNUTZUNGSGRADS EINES BORSTENFELDS EINER BÜRSTE

PROCÉDÉ ET DISPOSITIF POUR QUANTIFIER UN NIVEAU D'USURE D'UN CHAMP DE POILS D'UNE BROSSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.04.2017 Bulletin 2017/14**

(73) Proprietor: **The Procter & Gamble Company
Cincinnati, OH 45202 (US)**

(72) Inventors:
• **Noll, Adrian**
**61476 Kronberg/Taunus (DE)**
• **Mark, Erwin Paul**
**65824 Schwalbach am Taunus (DE)**

(74) Representative: **Töpert, Verena Clarita
Procter & Gamble Service GmbH
IP Department
Sulzbacher Straße 40-50
65824 Schwalbach am Taunus (DE)**

(56) References cited:
**WO-A1-00/10425**

• **"Investigation of wear in manual toothbrushes from different price categories", Schweiz Monatsschr Zahnmed, 2010, XP055253969, Retrieved from the Internet: URL:https://www.sso.ch/fileadmin/upload_sso/2_Zahnaerzte/2_SDJ/SMfZ_2010/SMfZ_09_2010/smfz-09_2010-forschung1.pdf [retrieved on 2016-02-29]**
• **Eva Kaiser ET AL: "Brush head wear, subject-perceived and laboratory cleaning performance of two oscillating-rotating electric toothbrush heads over 3 months", American journal of dentistry, April 2012 (2012-04), pages 84-90, XP055253952, United States Retrieved from the Internet: URL:http://www.dentalcare.com/media/en-US/research_db/pdf/am-j-dent/2012/AJDApril2012Kaiser.pdf [retrieved on 2016-02-29]**

**Description**

FIELD OF THE INVENTION

The present disclosure is concerned with a method for quantifying a wear level of a bristle field of a brush which comprises a plurality of bristle tufts. The present disclosure is further concerned with a device for quantifying a wear level of a bristle field of a brush.

BACKGROUND OF THE INVENTION

During use of brushes, bristles and bristle tufts being attached to a mounting surface of said brush are deformed leading a deteriorating cleaning efficiency of the brush with increasing use. The wear is macroscopically visible by e.g. bending of bristles or fraying of tufts. Increasing toothbrush wear is seen as less appealing by consumers. In case of toothbrushes, longer use leads to more wear, and this decreases the plaque removal efficacy. This fact is accepted across the category and supported by various studies (backed by various brush manufacturers) for manual and powered toothbrushes.

In order to have a classification of the wear of toothbrushes there do exist classifications of wear based on a subjective visual assessment of the brushes by a user defining certain criteria for certain classes of wear, e.g. five total classes according to the so called "Conforti scale" ranging from class 0 (no wear) over classes 1 (light wear), 2 (medium wear), 3 (heavy wear) of the class 4 (extreme wear). Such a classification of wear is mentioned in the publication "Investigation of wear in manual toothbrushes from different price categories" by K. Van Nüss et AL. - Schweiz Monatsschr Zahnmed Vol. 120 9/2010 and in the Research Article "Brush head wear, subject-perceived and laboratory cleaning performance of two oscillating-rotating electric toothbrush heads over 3 months" by E. Kaiser et AL. However, these features correlated with the classification of wear are very subjective values.

It is therefore an object of the present disclosure to provide a more reliable classification of the wear of brushes, and in particular toothbrushes. Such a reliable classification might be used for scientific evaluations as well as for a consumer's decision to replace a used brush or brush head.

SUMMARY OF THE INVENTION

In accordance with one aspect, a method for quantifying a wear level of a bristle field of a brush is provided, the brush comprising a plurality of bristle tufts grouping each a plurality of single bristles, said bristle tufts being distributed over the bristle field, the method comprising the following steps:

- recording and storing an image of the bristle field;
- converting the image to a gray scale image by use of digital image processing and storing the gray scale image;
- converting the gray scale image to at least one binarized image with only two tone values, also called "binarization" in the following description, by use of digital image processing, thereby assigning one tone value to bristles and/or bristle tufts visible in the image and the other tone value to the background in the image not showing bristles or bristle tufts, and storing the binarized image;
- applying at least one of the following evaluation methods:

  (a) determining the geometrical splay of the bristle field by creating a contour image from the binarized image with the contour pixels of the bristle field and using the coordinates of the contour pixels to determine the maximum brush width and length of the bristle field and/or by creating a convex hull enwrapping all contour pixels and having the smallest possible size to determine the area and the circumference of the bristle field
  (b) determining the filament surface of all visible bristles in the image by counting the pixels in the binarized image having the one tone value of the binarized image assigned to bristles tufts;
  (c) determining the bristle tuft integrity in the image by counting separable tufts in the gray scale image by identifying local gray value maxima in the gray scale image.

- comparing the results of the at least one applied evaluation method with reference data of an unused brush and/or of used brushes with determined wear levels to classify the wear level of the bristle field of the brush.

In accordance with one aspect, a device for quantifying a wear level of a bristle field of a brush or brush head is provided, the brush or brush head comprising a plurality of bristle tufts grouping each a plurality of single bristles, said bristle tufts being distributed over the bristle field, the device comprising:

- a camera for recording at least one image of the bristle field;
- a holder for the brush or brush head adapted to position the bristle field under the camera such that the direction of recording is directed parallel to the axis of the bristles or bristle tufts of an unused brush held in the holder;
- at least one light sources arranged in particular perpendicularly to the direction of recording; and

  - a processor unit adapted to perform the method according to the present disclosure.

BRIEF DESCRIPTION OF THE DRAWINGS

The invention is described in more detail below with reference to various embodiments and figures, wherein:

Fig. 1    shows schematically an embodiment of the device according to the present disclosure;

Fig. 2    shows schematically an embodiment of the method according to the present disclosure;

Fig. 3    shows an exemplary overview of the results of the evaluation methods according to the present disclosure.

DETAILED DESCRIPTION OF THE INVENTION

The disclosure is related to determining and quantifying a wear level of a bristle field of a brush, such as in particular a manual or powered toothbrush. The bristle field is located in the brush head of the brush, the brush head might be separable from the brush e.g. for removal after reaching a certain wear level and substitution with a new brush head. In this sense, the term "bristle field of a brush" includes in this description also the bristle field of a brush head. The bristle field comprises a plurality of bristle tufts grouping each a plurality of single bristles, said bristle tufts being in particular unequally distributed over the bristle field.

Related brushes might be intended e.g. for health care purposes to e.g. remove oral plaque. Other brushes can be used for other surface cleaning, e.g. household surfaces like floors, tiles, or cleaning of devices, e.g. shoes, clothes. Typical bushes are made by e.g. stapling, hot-tufting or fixing bristles by another anchor-free technology. Examples for filament types of the bristles are Nylon, PBT, combinations thereof. The bristles might comprise two or more components, e.g. coextruded, natural hair or the like. The filaments can have cylindrical or non-cylindrical cross-sections and might be regular or end-rounded, tapered, flagged, crimped, spiral, twisted etc..

The recorded image might be a digital or analogue image. However, a digital image is preferred. Digital image acquisition might be performed by a digital camera or microscope, by tomography, by laser scanning or other scanning methods, such as a synchrotron. An analogue image, such as a classical paper or film image, will in line with the present disclosure be digitalized (e.g. by scanning) for the digital image processing steps described below.

The gray scale image of the recorded image might e.g. be a 8-bit gray scale image. The major aim of this conversion in the gray scale image is to remove redundant color information. This enables further process steps without processing complexity due to color or other redundant information, and removes image background which might lead to incorrect data interpretation. The gray scale value of one pixel in the gray scale image might be derived by summing the color values of the all colors, e.g. red, green and blue, of one pixel in the image of the bristle field and dividing by the number of colors, i.e. by three in the example of an RGB-color space. Of course, other conversions known in the art can also be used.

Depending on the evaluation method applied to this gray scale image, the gray scale image might be further processed in order to carve out the desired information. This is part of embodiments of the respective evaluation methods and described later more in detail.

Please note that digital image processing tools, such as in particular suited software tools and methods are known to the one skilled in the art. This description is directed to the application of suited digital image processing methods for the specific technical aim. The technical realization of the digital image processing tools and methods are known in the art, and, thus, are not described in detail here. The one skilled in the art can apply these tools and methods by use of commercially available software tools offering a variety of different image processing possibilities, however without any advice how to use these possibilities for a certain aim. Therefore, choosing certain tools or methods from the available tools is not evident for the one skilled in the art and part of the present disclosure.

The following binarization of the gray scale image according to the present disclosure results in a digital image with only two distinguishable tone values of the gray scale, in particular black (e.g. tone value 0) and white (e.g. tone value 255 for an 8-bit gray scale image). The binarization of the image is used in particular to distinguish areas of interest attributed to one tone value (e.g. 255) of the gray scale from background areas attributed to the other tone value (e.g. 0). In particular, parts of the image identified as parts of bristles are assigned with the one tone value indicating an area of interest, in particular the tone value "white" or 255. Other parts of the image not showing parts of bristles are assigned with the other tone value indicating background areas, in particular the tone value "black" or "white".

The binarization methods used might by different for different evaluation methods applied to the image. The binarization might be a global or local binarization, wherein a global binarization applies one single threshold for a gray scale value for the complete image and a local binarization applies different thresholds for a gray scale value for different areas of the image. During the binarization, the gray scale value of a pixel is compared with the global or local threshold. In dependence of this comparison, either the one or the other of the distinguishable tones values (and the respective gray scale value) is assigned to this pixel. The aim of the binarization is a removal of potential artefacts in the pictures before applying a respective evaluation method of the picture to identify features indicating the wear level of the bristle field.

Accordingly, different binarization images might be generated during the application of different evaluation methods. This is part of embodiments of the respective evaluation methods and described later more in detail.

The contour pixels of the bristle field used in the evaluation method (a) as described before are in particular those pixels that are border pixels between the area of interest and the area of background. There might be different techniques to identify those border pixels. The convex hull might in particular be created by straight lines of different lengths linked such that they surround one single area and that the angles between each two of the adjacent lines measured towards the surrounded area are less than 180°.

The length and width of the bristle field might be determined by the maximum difference between all of the contour pixel coordinates in the one and the other coordinate direction, i.e. typically the maximum difference between the x-coordinates and the maximum difference of the y-coordinates, respectively, of the contour pixel (x,y)-coordinates.

The area of the bristle field might be determined by counting all pixels surrounded by the lines forming the convex hull. In a similar way, the circumference of the bristle field might be determined by the sum of the length of all lines forming the convex hull.

During use of the brush, bristles of the bristle tufts are deformed. This normally leads to changes in the area covered by the bristle field due to splay of the bristle tufts. Accordingly, the geometrical splay (as examined with evaluation method (a)) is a measure for the wear level of the brush.

During use of the brush, also single bristles of the bristle tufts are deformed thus amending the filament surface (of the bristles) visible in an image. Accordingly, the filament surface (as examined with evaluation method (b)) is a measure for the wear level of the brush.

Depending on the level of wear of the brush, deformed bristles of one bristle tuft might locally overlap with bristles of another tuft. Depending in particular on the number of overlapping bristles from different tufts, the different tufts might not be separable in the gray scale image. Accordingly, the number of separable tufts (as examined with evaluation method (c)) is also an indicator for the wear level of the bristle field of the brush or brush head.

The reference data for comparing the results of the evaluation methods might be obtained by the same process as described above for defined reference brushes of the same type empirically, or might have been provided based on e.g. technical drawings or other measurements of reference brushes.

It might be advisable to store the image after each process step of the digital image processing so that all images of the different processing stages are available for comparison and/or different digital image processing, e.g. by copying the images and applying other image processing methods and/or tolls. This might in particular useful to create masks to be applied to images and/or for subtracting two images processed in different ways from each other.

According to an embodiment, at least two of the three evaluation methods (a), (b), (c) might applied. Accordingly, the results of the at least two evaluation methods (a)(b), (a)(c) or (b)(c) might be combined in the classification of the wear level. In case of a combination of the before explained evaluation methods (b)(c), the wear level might be determined as a function depending of number of separable tufts, of the filament surface and/or the product of the number of separable tufts and the filament surface. The function can be determined by regression from empirical data. Generally, all results might be combined in a suited way to define the wear level, e.g. by a functional relationship determined from empirical data for each type of brush.

The image of the bristle filed might be recorded using a dark field microscopy method. As the one skilled in the art will acknowledge, in the dark field microscopy the bristle field of the brush is illuminated such that the unscattered light beam from the light source is excluded from the image. This result is a picture with the bristles of the bristle field being enlightened and with the bristle head being dark for having high contrast images of the bristles to be examined. In an embodiment, the bristles may be illuminated from two opposing directions perpendicular to the direction of the recording of the image. The direction of recording of the image can be parallel to the direction of the (main) bristles in an unused brush.

If the direction of the recording is basically parallel to the direction of the bristles and the length of the bristles is varying over the bristle head, e.g. by providing different bristle tufts having bristles with a different length of the bristles, it might useful to record a high depth-of-field image by recording different images focused between the bristles with the shortest length and the bristles with the highest length, and by combining these images into one image in which all bristles are focused by means of digital image processing. This is useful, if the depth of field obtainable by the camera is not sufficient taking into account the width of aperture.

Further advantageous details of the proposed method and in particular of each of the proposed evaluation methods (a), (b) and/or (c) are described in the dependent claims. The advantages of each of the different steps might become apparent from the description of the present disclosure. However, it is clear to the one skilled in the art that with the embodiment of the method and/or the device, many different advantageous features are disclosed that do not have to be used together in one embodiment to realize the invention. The one skilled in the art understands that the advantages described in relation with certain features can be realized by using only these features in an embodiment of the present disclosure irrespective of all other features and advantages described in combination in the one embodiment.

Another aspect of the present disclosure is directed to a device for quantifying a wear level of a bristle field of a brush or brush head comprising a plurality of bristle tufts grouping each a plurality of single bristles, said bristle tufts being in particular unequally distributed over the bristle field, the device comprising:

- a camera for recording at least one image of the bristle field;
- a holder for the brush or brush head adapted to position the bristle field such that the direction of recording (i.e. the optical axis of the camera) is directed essentially parallel to the axis of the bristles or bristle tufts of an unused brush held in the holder;
- at least one light source arranged perpendicularly to the direction of recording; and
- a processor unit adapted to perform the method as described before or parts thereof.

Further advantageous features are disclosed in the dependent claims. However, it is to be emphasized the application of the proposed method is not limited to the use of the device as described before. It is also possible to perform the method with any device having a camera and a processor unit adaptable by software means to execute the method steps as described before. The image processing of the acquired image can thus take place in a processor unit which may, but does not have to be connected to the image acquisition system. The image can be transferred by file transfer, wireless (e.g. Bluetooth, wifi, radio ...) or optical or other transmission. The processing unit can be e.g. a computer (desktop, laptop), handheld/ tablet, smartphone, embedded in another device, e.g. toothbrush or be included in the camera system. The image processing can be automated by e.g. using a suitable software package or programming language. Accordingly, the proposed method can also be used by a consumer without any specific measuring device.

The following is a non-limiting discussion of an example embodiment of a method for quantifying a wear level of a bristle field, and a device for performing such method in accordance with the present disclosure, where reference to the Figures is made.

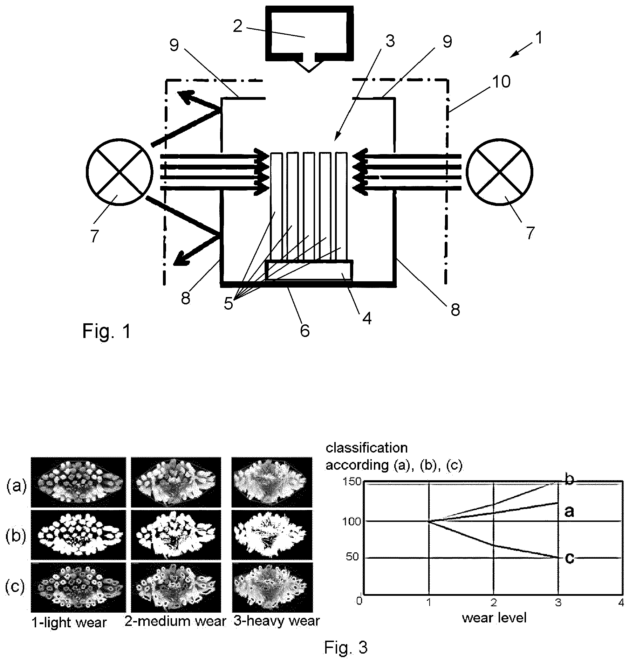

In Fig. 1, an embodiment device 1 for quantifying a wear level of a bristle field of a brush or brush head is schematically shown. The invention is however not limited to the use of the described device 1.

The device 1 has camera 2 for recording at least one image of the bristle field 3 of a brush 4 (e.g. the brush head of a toothbrush). The bristle field 3 comprises several bristle tufts 5 grouping several single bristles each. The bristles of the bristle tufts 5 are fixed in the brush 4 or brush head. A holder 6 for the brush 4, in particular the brush head, adapted to position the bristle field 3 such under the camera 2 that the direction of recording of the camera is directed essentially parallel to the axis of the bristles or bristle tufts 5 of an unused brush 4 held in the holder 6. In other words, the camera 2 is directed such that the image recoded by camera shows the free ends bristle tufts 5.

Further, two light sources 7 arranged opposite to each other along an axis perpendicular to the direction of recording, thus illuminating the bristle tufts 5 from the side with respect to the direction of recording. Deflection guards 8 are disposed between the brush 4 and each of the light sources 7, the deflection guards 8 extending such in the direction of recording that the part of the brush 4 or brush head fixing the bristles of the bristle tufts 5 is shielded from light of the light sources 7 (displayed as arrows extending from the light sources 7). Accordingly, the brush 4 appears dark in the recorded image thus enhancing the contrast of the bristles or bristle tufts 5 being the area of interest from the dark background. Additional top deflection guards 9 might be provided to avoid that light from the light sources directly enters into the camera 2. Further, an optional housing 10 might be provided to cover the holder 6 with the deflection guards 8 and the top deflection guards 9, if provided. The optional housing 10 leads to a darker background in the image and reduces artefacts in the recorded images.

A black colored granulate might be filled into a tray composed of the holder 6 and the deflection guards 8 covering the parts of the brush 4 held in the tray fixing the bristles. This enhances the contrast of the bristles in the image taken by the camera 2 without impact on the form and/or color of the bristles.

The device 1 further comprises a processor unit (not shown) having access to the images recorded by the camera 2 and adapted to perform the proposed method for quantifying a wear level of a bristle field 3 of a brush 4 or brush head.

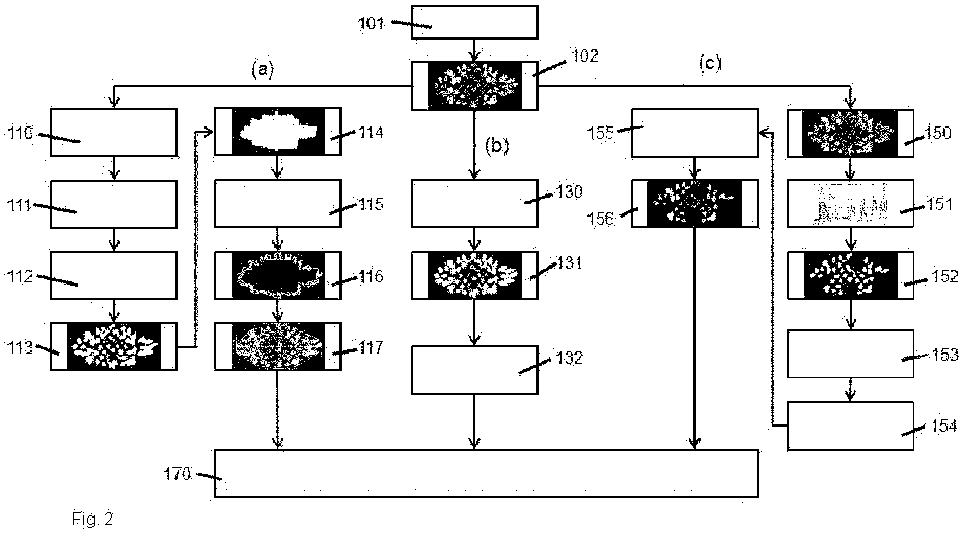

An embodiment of the method is described in the following with respect to Fig. 2. It is to be noted that the method described according to the embodiment comprises many optional steps. The one skilled in the art might amend the method as described below by way of example, in particular by cancelling certain methods steps without leaving the subject matter of the invention.

For the different message steps described below it might be useful to have access to all images produced in certain message steps, all images created in one of the message steps may be stored separately. If not all images are stored, it is useful to store at least these images to be reused later while processing the method.

In the first step 101 of the proposed method, an image of the bristle field 3 of the brush 4 is recorded, typically as a color image. The image is stored in a memory of the processing unit. Following, in step 102, the image is converted to a 8-bit gray scale image and stored as a gray scale image. Further processing of the gray scale image of step 102 depends on the evaluation method used for assessment of certain features of the bristle field 3. In line with the present disclosure, evaluation methods (a), (b) and (c) are described that might be used separately or in any combination method for quantifying a wear level of a bristle field 3.

Accordingly, the message steps are described in the following for each of the evaluation methods (a), (b) and (c), beginning with the evaluation method (a) for determining the geometrical splay of the bristle field and the message steps 110 to 117.

The method steps 110 to 113 are related to converting the gray scale image into a binarized image. In the first step 110, all pixels of the gray scale image having a gray scale value above a first specified binarization threshold are set to one tone value assigned to the bristles and/or bristle tufts (corresponding to the tone value "white"; in the following the terms "tone value white" and "tone value assigned to the bristles and/or bristle tufts" are used synonymously). In the same way, all pixels of the gray scale image having a gray scale value below the first specified binarization threshold are set to the tone value assigned to the background of the image (corresponding to the color "black"; in the following the terms "tone value black" and "tone value assigned to the background of the image" are used synonymously). The first specified binarization threshold may be specified as gray value between 5%-30%, ideally below 15%, of the range of the gray scale image. This method step 110 achieves a binarziation and might be used as the only step of binarization during the evaluation method (a). However, it might be advisable to perform at least also the second and third step 112, 113 for higher quality results, or all of the method steps 111 to 113 presented below to achieve enhanced image quality.

In the following optional step 111, using the image of the first step 110 as a mask, the mask is subtracted from the gray scale image resulting in a gray-scale image of the bristles only as the background is darkened to the background tone value. The contrast of this gray-scale image of the bristles is enhanced by an automatic contrast enhancing operation using digital image processing, and all pixels of the gray scale image of the bristles with enhanced contrast having a gray scale value above a second specified binarization threshold are set to the one tone value "white". All the other pixels of the gray scale image having a gray scale value below the second specified binarization threshold are set to the tone value "black". The second specified binarization threshold might be chosen as a mean gray value of the gray scale image of the bristle field.

In the second step 112 of the binarization, in the image created in the first step 110 or the further step 111 pixels with tone values assigned to the background are identified that are enclosed from pixels assigned to the bristles and/or bristle tufts. These identified pixels are converted to the tone value assigned to the bristles and/or bristle tufts. This second step 112 is also called "fill-hole-process". It removes background pixels within the bristle tufts.

In a following third step 113, conglomerates of pixels with the tone value assigned to bristles and/or bristle tufts are identified that are too small to represent a bristle or a bristle tuft. The identified conglomerates of pixels are assigned to the tone value assigned to background. Optionally, repeating the second step 112 and the third step 113 can be repeated several times. The identified conglomerates might have less than 100 pixels in the conglomerate area. However, the number of pixels depends on the resolution of the camera and might be adapted to about half of the size of a bristle or any other size chosen adequately by the one skilled in the art.

These steps 110 to 113 might be performed consecutively one after the other in preparation of determining the geometrical splay of the bristle field in line with evaluation method (a). As a result, a binarized image of the bristle field 3 is created in step 113 (as shown in the Fig. 2). Image artefacts outside of the area of the brush field 3 under consideration are removed, and the image quality is enhanced. Omitting any or all of the steps 111 to 113 may result in incorrect geometrical parameters in the further course of the image analysis for determining the geometrical splay according to evaluation method (a).

In a first evaluation step 114 of evaluation method (a), a morphological image erosion of the binarized image according to step 110 or 113 is performed by testing the binarized image with a predefined structure-element and assigning the tone value "white" to a pixel covered by the center of the structure-element if the complete structure-element fits into the binarized image, and more precisely into the areas with the tone value "white". Fitting into the binarized image in particular means fitting into the pixel area with the tone value not assigned to the background, i.e. the tone value "white". In case of a circle as structure-element, its center might be chosen as the circle-midpoint. However, the form of the structure element and its center located within the structure-element might be chosen in any suited way. The result of this first evaluation step of the evaluation method (a) is a binary picture of the inside of the bristle field 3 without the border of the bristle field 3 as shown in step 114 of Fig. 2. The border of the bristle flied 3 is cut off by morphological image erosion.

Following, in a second evaluation step 115, the image obtained in the first evaluation step 114 is subtracted from the binarized image used as basis in the first evaluation step, i.e. obtained in step 110 or step 113, or from the gray scale image (of step 102). The resulting image is reduced to its outlines using an outline function of the digital image processing. This results in an image displaying only the contour of the brush field 3. The third evaluation step 116 comprises marking every pixel of the outlines creating the contour image with the marked pixels being the contour pixels of the bristle field, as shown in step 116 of Fig. 2.

In the final fourth evaluation step 117 of evaluation method (a), the coordinates of the contour pixels are used to determine the maximum brush width and length of the bristle field. Further, a convex hull is created enwrapping all contour pixels and having the smallest possible size to determine the area and the circumference of the bristle field. This is indicated by white lines in the figure included into step 117 of Fig. 2.

Alternatively or additionally, the evaluation method (b) determining the filament surface can be performed, as described in the following with regard to steps 130 to 133 as shown in Fig. 2.

In the first step 130 of binarization, all pixels of the gray scale image according to step 102 having a gray scale value above a first specified binarization threshold are set to the one tone value "white" and all pixels of the gray scale image having a gray scale value below the first specified binarization threshold to the tone value "black". The first specified binarization threshold for this binarization step 130 may be specified as mean gray value of the gray scale image of the bristle field 3 of the image of step 102. A second step 131 of the binarization might be performed identifying conglomerates of pixels with the tone value "white" that are too small to represent a bristle or a bristle tuft 5. The conglomerates of pixels identified in this step are set to the tone value "black". These steps might be performed consecutively one after the other in preparation of the evaluation method (b) determining the filament surface of the bristle field. As a result, a binarized image of the bristle in the bristle field is created as shown in step 131. Image artefacts outside of the area of the brush under consideration are removed, and the image quality is enhanced.

For determining the geometrical splay according to evaluation method (b), in the evaluation step 132 all pixels in the binarized image generated in step 130 or step 131 are counted having the tone "white". This value is indicative of the filament surface of the bristles in the bristle field 3.

Alternatively or additionally, the evaluation method (c) determining the bristle tuft integrity can be performed, as described in the following with regard to steps 150 to 157 as shown in Fig. 2.

In preparation of the evaluation method (c), the following steps 150 to 154 are performed for binarization of the gray-scale image. To this aim, in a first step 150 a median filter with a determined filter radius of e.g. 10 pixels is applied to the gray-scale image generated in step 102 replacing each tone value of a pixel with a medium tone value of all pixels in the center radius. This step leads to a more uniform gray tone value of the bristle tufts 5 as small wholes between single bristles of the bristle tufts 5 are removed, as evident from step 150 in Fig. 2. In the following second step 151, a rolling-ball algorithm with a suited ball radius, in particular corresponding to less than half of bristle tuft width is applied to the in particular 3-dimensional histogram of the tone curve values of the image received in the first step 150. Using this rolling-ball algorithm, an image of the surface is created that is reachable by the rolling ball. Such rolling-ball algorithm is accordingly suited to identify the bristle tufts 3 in a gray-scale image with high accuracy. A following third step 152 is used for locally binarizing the image obtained in the second step 151, using a binarization radius which may be in the order of the diameter of a bristle tuft 5 of an unused brush and a local binarization threshold distinguishing the a peak within the binarization radius over the background. A suited method for determining the local binarization threshold is the so called Niblack-Method, using the equation $t = mean + 0{,}2 \times std\_dev$ with $mean$ being the average gray value and $std\_dev$ the standard deviation of surrounding pixels within the given binarization radius. Further suitable methods known in the art are e.g. Bernsen, Mean, Median, MidGrey or Sauvola. However, it was surprisingly found out that the Method according to Niblack is advantageous to distinguish between the individual tufts more reliably.

In the optionally following fourth step 153, all conglomerates of pixels with the tone value "white" are identified that are too small to represent a bristle or a bristle tuft 5. These identified conglomerates of pixels are assigned to the tone value "black". The size of the identified conglomerates might be 1000 pixels, for example, or more generally about 20% of the pixel size of a bristle tuft 5 of an in particular unused brush 4. Optionally, in a fifth step 154, also the circularity of the of all shapes in the image according to the third step 152 or the fourth step 154 are measured. T the tone value "black" is then assigned to all pixels of shapes in the image having a circularity below a predefined circularity threshold, e.g. in the order of 0.3 in a range between 0 and 1. The optional steps 153 and 154 improve the image quality and remove artefacts in the resulting binarized image.

For determining the tuft integrity according to evaluation method (c), the image of the surface reachable by the rolling-ball obtained from step 151 is used. In a first (optional) evaluation step 155, the image of step 153 or step 154 is inverted and subtracted from the image obtained in step 151. In the second evaluation step 156, local gray value maxima are identified in the image obtained in the first evaluation step 155 or in the image obtained in step 151. The number of maxima is counted. The number of maxima counted gives the number of separable bristle tufts 5 being a measure for the integer bristle 5 tufts.

The resulting data (results) of the evaluation methods (a), (b), (c) described above can be stored in a database. Then, the resulting data of the processes above are compared to reference data in step 170. The reference data might have been obtained by the same processes as described above for defined reference brushes, or have been provided based on e.g. technical drawings or other measurements of reference brushes.

Overall, the geometrical splay according to evaluation method (a) and the filament surface according to evaluation method (b) are proportional to the wear level. This means that for a given brush in its unused state defined as 100%, for worn or used brushes any of the parameters according to evaluation methods (a) and (b) will be equal or larger than 100% on a statistical base. The larger the parameter is, the higher is the wear level of the brush under consideration.

Tuft integrity and the resulting number of distinguishable tufts in a brush are antiproportional to the wear level. This means that for a given brush in its unused state the number of tufts is defined as 100%, for worn brushes the number of distinguishable tufts as detected by process c will be equal or smaller than 100% on a statistical base. The lower the number of distinguishable tufts vs. the unused brush, the higher the wear of the brush under consideration.

This is evident form Fig. 3 showing on the left side graphical indications of the wear level of toothbrushes and on the right side the classification according to the present disclosure as a result of the application for each of the evaluation methods (a), (b) and (c).

The curves on the right side show the wear levels according to an assessment of the evaluation methods (b) and (c).

A set of toothbrushes (e.g. four toothbrushes per wear level) was used to generate empirical data using the assessment methods mentioned above. These data were analyzed statistically and from this the following formula was obtained, correlating parameters from the assessment methods above with wear levels:

$$\text{wear level} = a + b * \#\text{tufts} + c * \text{fil\_area} + (\#\text{tufts} - d) * (\text{fil\_area} - e) * f,$$

wherein "fil_area" is the result of evaluation method (b), "#tufts" is the result of evaluation method (c), and "a", "b", "c", "d", "e", "f" are fit parameters. The resulting wear level is rounded up or down and reported in whole numbers.

An advantage of the presented disclosure is an objective, parametric grading. The evaluation method (b) defines the effectively available filament surface of the bristles, while current methods may omit splay which is only visible in the central areas of the brush.

A precise correlation of the results of the present disclosure versus existing methods, e.g. conventional wear index based on splay, is possible. After having done such correlation, there is no need for specifically trained graders for wear assessment. This allows faster analysis of large number of brushes. Further, the wear level can be assessed by untrained individuals, e.g. via an app on a portable device, such as a smartphone or tablet. As evident form the graphs on the right side of Fig. 3, a fine discrimination between wear levels is possible contrary to the current parametric "big buckets". Accordingly, with the present disclosure the following disadvantages of prior art are avoided:

- Various subjective grading systems are competing.
- Specifically trained graders are needed for wear assessment.
- Analysing large number of brushes is time consuming.

The method proposed can be applied for manual toothbrushes, electric toothbrushes, heads thereof or their refills, manual facial/ body/ cosmetic brushes, electric facial/ body/ cosmetic brushes or other brushes for e.g. household, surface or fabric cleaning,

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method for quantifying a wear level of a bristle field (3) of a brush (4) comprising a plurality of bristle tufts (5) grouping each a plurality of single bristles, said bristle tufts (5) being distributed over the bristle field (3), the method comprising the following steps:

    - recording and storing an image of the bristle field (3);
    - converting the image into a gray scale image by use of digital image processing and storing the gray scale image;
    - converting the gray scale image to at least one binarized image with only two tone values by use of digital image processing, thereby assigning one tone value to bristles and/or bristle tufts (5) visible in the image and the other tone value to the background in the image not showing bristles or bristle tufts, and storing the binarized image;
- applying at least one of the following evaluation methods:

(a) determining the geometrical splay of the bristle field (3) by creating a contour image from the binarized image with the contour pixels of the bristle field (3) and using the coordinates of the contour pixels to determine the maximum brush width and length of the bristle field (3) and/or by creating a convex hull enwrapping all contour pixels and having the smallest possible size to determine the area and the circumference of the bristle field (3);
(b) determining the filament surface of all visible bristles in the image by counting the pixels in the binarized image having the one tone value of the binarized image assigned to bristles and/or bristle tufts (5);
(c) determining the bristle tuft integrity in the image by counting separable tufts in the gray scale image by identifying local gray value maxima in the gray scale image, optionally after separating the bristle tufts (5) by substracting a binarized image mask generated by the conversion of the gray scale image to the at least one binarized image identifying the bristle tufts (5).

- comparing the results of the at least one applied evaluation method with reference data of an unused brush (4) and/or of used brushes (4) with determined wear levels to classify the wear level of the bristle field (3).

2. The method according to claim 1, wherein at least two of the three evaluation methods (a), (b), (c) are applied and wherein the results of the at least two evaluation methods (a), (b), (c) are combined in the classification of the wear level.

3. The method according to claim 1 or 2, wherein the image of the bristle filed (3) is recorded using a dark field microscopy method.

4. The method according to any of the preceding claims, wherein a high depth-of-field image is recorded by recording different images focused between the bristles with the shortest length and the bristles with the highest length, and by combining these images into one image in which all bristles are focused.

5. The method according to any of the preceding claims, wherein converting the gray scale image to one binarized image comprises at least one of the following steps:

- in a first step (110), setting all pixels of the gray scale image having a gray scale value above a first specified binarization threshold to the one tone value assigned to the bristles and/or bristle tufts (5) and setting all pixels of the gray scale image having a gray scale value below the first specified binarization threshold to the tone value assigned to the background of the image;
- in a further optional step (111), using the image of the first step (110) as a mask and subtracting the mask from the gray scale image resulting in a gray-scale image of the bristles, enhancing the contrast of the gray-scale image of the bristles, and setting all pixels of the gray scale image of the bristles with enhanced contrast having a gray scale value above a second specified binarization threshold to the one tone value assigned to the bristles and/or bristle tufts (5) and setting all pixels of the gray scale image having a gray scale value below the second specified binarization threshold to the tone value assigned to the background of the image;
- in a second step (112), in the image created in the first step (110) or the further step (111), identifying pixels with tone values assigned to the background enclosed from pixels assigned to the bristles and/or bristle tufts (5), and converting these identified pixels to the tone value assigned to the bristles and/or bristle tufts (5);
- in a third step (113), identifying conglomerates of pixels with the tone value assigned to bristles and/or bristle tufts (5) which are too small to represent a bristle, and assigning the identified conglomerates of pixels to the tone value assigned to background, and optionally repeating the second step and the third step several times.

6. The method according to any of the preceding claims, wherein the binarized image, and in particular of the binarized image according to the third step (113) of claim 5, is used for determining the geometrical splay according to evaluation method (a), comprising the following evaluation steps:

- in a first evaluation step (114), performing a morphological image erosion of the binarized image by testing the binarized image with a predefined structure-element and assigning the tone value assigned to the bristle and/or bristle tufts (5) to a pixel covered by the center of the structure-element if the complete structure-element fits into the binarized image;

- in a second evaluation step (115), subtracting the image obtained in the first evaluation step (14) form the binarized image or from the gray scale image and reducing the resulting image to its outlines using an outline function of the digital image processing;
- in a third evaluation step (116), marking every pixel of the outlines creating a contour image with the marked pixels being the contour pixels of the bristle field (3);
- in a fourth evaluation step (117), the coordinates of the contour pixels are used to determine the maximum brush width and length of the bristle field (3), and a convex hull enwrapping all contour pixels and having the smallest possible size is created to determine the area and the circumference of the bristle field (3).

7. The method according to any of the preceding claims, wherein converting the gray scale image to another binarized image comprises at least the first of the following steps:

- in a first step (130), setting all pixels of the gray scale image having a gray scale value above a first specified binarization threshold to the one tone value assigned to the bristles and/or bristle tufts (5), and setting all pixels of the gray scale image having a gray scale value below the first specified binarization threshold to the tone value assigned to the background of the image;
- in a second step (131), identifying conglomerates of pixels with the tone value assigned to bristles and/or bristle tufts (5) that are too small to represent a bristle or a bristle tuft (5) and assigning the identified conglomerates of pixels to the tone value assigned to background.

8. The method according to any of the preceding claims, wherein the binarized image, and in particular of the binarized image according to the second step (131) of claim 7, is used for determining the filament surface according to evaluation method (b), comprising the following evaluation step (132):

- counting all pixels in the binarized image having the tone value assigned to the bristles and/or bristle tufts (5).

9. The method according to any of the preceding claims, wherein converting the gray scale image to another binarized image comprises at least the first three of the following steps:

- in a first step (150), applying a median filter with a determined filter radius to the gray-scale image replacing each tone value of a pixel with a medium tone value of all pixels in the center radius;
- in a second step (151), applying a rolling-ball algorithm with a suited ball radius to the histogram of the tone curve values of the image received in the first step (150) and creating an image of the surface reachable by the rolling-ball;
- in a third step (152), locally binarizing the image obtained in the second step (151), using a binarization radius preferably in the order of the diameter of a bristle tuft of an unused brush and a local binarization threshold distinguishing the a peak within the binarization radius over the background;
- in a fourth step (153), identifying all conglomerates of pixels with the tone value assigned to bristles or bristle tufts (5) which are too small to represent a bristle or a bristle tuft (5), and assigning the identified conglomerates of pixels to the tone value assigned to background;
- in a fifth step (154), measuring the circularity of the of all shapes in the image according to the third step or the fourth step, and assigning to all pixels of shapes in the image having a circularity below a predefined circularity threshold the tone value assigned to background.

10. The method according to claim 9, wherein the image of the surface reachable by the rolling-ball obtained from the second step (151) of claim 9 is used for determining the tuft integrity according to evaluation method (c), comprising at least the second of the following evaluation steps:

- in a first evaluation step (155), inverting the image of the fourth step (153) or fifth step (154) of claim 9 and subtracting the inverted image from the image obtained in second step (151) of claim 9;
- in a second evaluation step (156), identifying local gray value maxima in the image obtained in the first evaluation step (155) or in the image obtained in the second step (151) of claim 9 and counting the number of maxima.

11. A device for quantifying a wear level of a bristle field (3) of a brush (4) or brush head comprising a plurality of bristle tufts (5) grouping each a plurality of single bristles, said bristle tufts (5) being distributed over the bristle field (3), the device comprising:

- a camera (2) for recording at least one image of the bristle field (3);
- a holder (6) for the brush (4) or brush head adapted to position the bristle field (3) under the camera (2) such that the direction of recording is directed parallel to the axis of the bristles or bristle tufts (5) of an unused brush (4) held in the holder (6);
- at least one light source (7) arranged perpendicularly to the direction of recording; and
- a processor unit adapted to perform the method according to any of the claims 1 to 10.

12. A device according to claim 11, wherein at least two light sources (7) are arranged perpendicular to the direction of recording.

13. A device according to claim 12, wherein the at least two light sources (7) are arranged opposite to each other along an axis perpendicular to the direction of recording.

14. The device according to any of claims 11 to 13, further comprising deflection guards (8) disposed between the brush (4) and each of the light sources (7), the deflection guards (8) extending such in the direction of recording that the part of the brush (4) or brush head fixing the bristles is shielded from light of the light sources (7).

15. The device according to claim 14, wherein the holder (6) and the deflection guards (8) are integrally formed with a u-formed cross section forming a tray for holding the brush (4) or brush head.

**Patentansprüche**

1. Verfahren zum Quantifizieren eines Abnutzungsgrads eines Borstenfelds (3) einer Bürste (4), die eine Vielzahl von Borstenbüschel (5) umfasst, die jeweils eine Vielzahl einzelner Borsten gruppieren, wobei die Borstenbüschel (5) über das Borstenfeld (3) verteilt sind, wobei das Verfahren die folgenden Schritte umfasst:

   - Aufzeichnen und Speichern eines Bilds des Borstenfelds (3);
   - Konvertieren des Bilds in ein Graustufenbild mithilfe von digitaler Bildverarbeitung und Speichern des Graustufenbilds;
   - Konvertieren des Graustufenbilds in mindestens ein binarisiertes Bild mit nur zwei Farbtonwerten mithilfe von digitaler Bildverarbeitung, dadurch Zuweisen eines Farbtonwerts zu Borsten und/oder Borstenbüscheln (5), die in dem Bild sichtbar sind, und des anderen Farbtonwerts zu dem Hintergrund in dem Bild, der nicht Borsten oder Borstenbüschel zeigt, und Speichern des binarisierten Bilds;
   - Anwenden mindestens eines der folgenden Bewertungsverfahren:

     (a) Bestimmen der geometrischen Spreizung des Borstenfelds (3) durch Erzeugen eines Konturenbilds aus dem binarisierten Bild mit den Konturenpixeln des Borstenfelds (3) und Verwenden der Koordinaten der Konturenpixel zum Bestimmen der maximalen Bürstbreite und -länge des Borstenfelds (3) und/oder durch Erzeugen einer konvexen Hülle, die alle Konturenpixel umgibt und die kleinstmögliche Größe aufweist, um die Fläche und den Umfang des Borstenfelds (3) zu bestimmen;
     (b) Bestimmen der Filamentoberfläche aller sichtbaren Borsten in dem Bild durch Zählen der Pixel in dem binarisierten Bild mit dem einen Farbtonwert des binarisierten Bilds, der Borsten und/oder Borstenbüscheln (5) zugewiesen ist;
     (c) Bestimmen der Borstenbüschelintegrität in dem Bild durch Zählen trennbarer Büschel in dem Graustufenbild durch Identifizieren lokaler Grauwertmaxima in dem Graustufenbild, wahlweise nach dem Trennen der Borstenbüschel (5), durch Substrahieren einer Maske des binarisierten Bilds, die durch Konvertierung des Graustufenbilds in das mindestens eine binarisierte Bild erzeugt wurde, das die Borstenbüschel (5) identifiziert.

   - Vergleichen der Ergebnisse des mindestens einen angewendeten Bewertungsverfahrens mit Referenzdaten einer unbenutzten Bürste (4) und/oder von benutzten Bürsten (4) mit bestimmten Abnutzungsgraden, um den Abnutzungsgrad des Borstenfelds (3) zu klassifizieren.

2. Verfahren nach Anspruch 1, wobei mindestens zwei der drei Bewertungsverfahren (a), (b), (c) angewendet werden und wobei die Ergebnisse der mindestens zwei Bewertungsverfahren (a), (b), (c) bei der Klassifizierung des Abnutzungsgrads kombiniert werden.

3. Verfahren nach Anspruch 1 oder 2, wobei das Bild des Borstenfelds (3) mithilfe eines Dunkelfeldmikroskopieverfahrens aufgezeichnet werden.

4. Verfahren nach einem der vorstehenden Ansprüche, wobei ein Bild mit hoher Schärfentiefe aufgezeichnet wird, indem unterschiedliche Bilder aufgezeichnet werden, die zwischen den Borsten mit der kürzesten Länge und den Borsten mit der höchsten Länge fokussiert sind, und diese Bilder zu einem Bild, in dem alle Borsten fokussiert sind, kombiniert werden.

5. Verfahren nach einem der vorstehenden Ansprüche, wobei das Konvertieren des Graustufenbilds zu einem binarisierten Bild mindestens einen der folgenden Schritte umfasst:

   - in einem ersten Schritt (110) Einstellen aller Pixel des Graustufenbilds mit einem Graustufenwert über einem ersten spezifizierten Binarisierungsschwellenwert auf den einen Farbtonwert, der den Borsten und/oder Borstenbüscheln (5) zugewiesen ist, und Einstellen aller Pixel des Graustufenbilds mit einem Graustufenwert unter dem ersten spezifizierten Binarisierungsschwellenwert auf den Farbtonwert, der dem Hintergrund des Bilds zugewiesen ist;
   - in einem weiteren optionalen Schritt (111) Verwenden des Bilds des ersten Schritts (110) als Maske und Subtrahieren der Maske von dem Graustufenbild, was ein Graustufenbild der Borsten ergibt, wobei der Kontrast des Graustufenbilds der Borsten verstärkt wird, und Einstellen aller Pixel des Graustufenbilds der Borsten mit verstärktem Kontrast, die einen Graustufenwert über einem zweiten spezifizierten Binarisierungsschwellenwert aufweisen, auf den einen Farbtonwert, der den Borsten und/oder Borstenbüscheln (5) zugewiesen ist, und Einstellen aller Pixel des Graustufenbilds, die einen Graustufenwert unter dem zweiten spezifizierten Binarisierungsschwellenwert aufweisen, auf den Farbtonwert, der dem Hintergrund des Bilds zugewiesen ist;
   - in einem zweiten Schritt (112) in dem Bild, das im ersten Schritt (110) oder dem weiteren Schritt (111) erzeugt wurde, Identifizieren von Pixeln mit Farbtonwerten, die dem Hintergrund zugewiesen sind, umgeben von Pixeln, die den Borsten und/oder Borstenbüscheln (5) zugewiesen sind, und Konvertieren dieser identifizierten Pixel zu dem einen Farbtonwert, der den Borsten und/oder Borstenbüscheln (5) zugewiesen ist;
   - in einem dritten Schritt (113) Identifizieren von Konglomeraten von Pixeln mit dem Farbtonwert, der Borsten und/oder Borstenbüscheln (5) zugewiesen ist, die zu klein sind, um eine Borste darzustellen, und zuweisen der identifizierten Konglomerate von Pixeln zu dem Farbtonwert, der dem Hintergrund zugewiesen ist, und wahlweise mehrmaliges Wiederholen des zweiten Schritts und des dritten Schritts.

6. Verfahren nach einem der vorstehenden Ansprüche, wobei das binarisierte Bild und insbesondere das binarisierte Bild gemäß dem dritten Schritt (113) von Anspruch 5 zum Bestimmen der geometrischen Spreizung gemäß Bewertungsverfahren (a) verwendet wird, umfassend die folgenden Bewertungsschritte:

   - in einem ersten Bewertungsschritt (114) Durchführen einer morphologischen Bilderosion des binarisierten Bilds durch Testen des binarisierten Bilds mit einem vordefinierten Strukturelement und Zuweisen des Farbtonwerts, der den Borsten und/oder Borstenbüscheln (5) zugewiesen ist, zu einem Pixel, der von der Mitte des Strukturelements abgedeckt wird, wenn das komplette Strukturelement in das binarisierte Bild passt;
   - in einem zweiten Bewertungsschritt (115) Subtrahieren des im ersten Bewertungsschritt (14) erhaltenen Bilds von dem binarisierten Bild oder von dem Graustufenbild und Reduzieren des resultierenden Bilds auf seine Umrisse mithilfe einer Umrissfunktion der digitalen Bildverarbeitung;
   - in einem dritten Bewertungsschritt (116) Markieren jedes Pixels der Umrisse, wodurch ein Konturenbild erzeugt wird, wobei die markierten Pixel die Konturenpixel des Borstenfelds (3) sind;
   - in einem vierten Bewertungsschritt (117) werden die Koordinaten der Konturenpixel verwendet, um die maximale Bürstbreite und -länge des Borstenfelds (3) zu bestimmen, und eine konvexe Hülle, die alle Konturenpixel umgibt und die kleinstmögliche Größe aufweist, wird erzeugt, um die Fläche und den Umfang des Borstenfelds (3) zu bestimmen.

7. Verfahren nach einem der vorstehenden Ansprüche, wobei das Konvertieren des Graustufenbilds zu einem anderen binarisierten Bild mindestens den ersten der folgenden Schritte umfasst:

   - in einem ersten Schritt (130) Einstellen aller Pixel des Graustufenbilds mit einem Graustufenwert über einem ersten spezifizierten Binarisierungsschwellenwert auf den einen Farbtonwert, der den Borsten und/oder Borstenbüscheln (5) zugewiesen ist, und Einstellen aller Pixel des Graustufenbilds mit einem Graustufenwert unter dem ersten spezifizierten auf den Farbtonwert, der dem Hintergrund des Bilds zugewiesen ist;
   - in einem zweiten Schritt (131) Identifizieren von Konglomeraten von Pixeln mit dem Farbtonwert, der Borsten und/oder Borstenbüscheln (5) zugewiesen ist, die zu klein sind, um eine Borste oder ein Borstenbüschel (5) darzustellen, und Zuweisen der identifizierten Konglomerate von Pixeln zu dem Farbtonwert, der dem Hintergrund zugewiesen ist.

8. Verfahren nach einem der vorstehenden Ansprüche, wobei das binarisierte Bild und insbesondere das binarisierte Bild gemäß dem zweiten Schritt (131) von Anspruch 7 zum Bestimmen der Filamentoberfläche gemäß Bewertungsverfahren (b) verwendet wird, umfassend den folgenden Bewertungsschritt (132):

   - Zählen aller Pixel in dem binarisierten Bild, die den Farbtonwert aufweisen, der den Borsten und/oder Borstenbüscheln (5) zugewiesen ist.

9. Verfahren nach einem der vorstehenden Ansprüche, wobei das Konvertieren des Graustufenbilds zu einem anderen binarisierten Bild mindestens die ersten drei der folgenden Schritte umfasst:

   - in einem ersten Schritt (150) Anwenden eines Medianfilters mit einem bestimmten Filterradius auf das Graustufenbild, wobei jeder Farbtonwert eines Pixels mit einem mittleren Farbtonwert aller Pixel in dem Mittenradius ersetzt wird;
   - in einem zweiten Schritt (151) Anwenden eines Rollballalgorithmus mit einem geeigneten Ballradius auf ein Histogramm der Farbtonkurvenwerte des im ersten Schritt (150) empfangenen Bilds und Erzeugen eines Bilds der Oberfläche, die von dem Rollball erreicht werden kann;
   - in einem dritten Schritt (152) lokales Binarisieren des im zweiten Schritt (151) erhaltenen Bilds mithilfe eines Binarisierungsradius, vorzugsweise in der Größenordnung des Durchmessers eines Borstenbüschels einer unbenutzten Bürste, und eines lokalen Binarisierungsschwellenwerts, der den Peak innerhalb des Binarisierungsradius gegenüber dem Hintergrund unterscheidet;
   - in einem vierten Schritt (153) Identifizieren aller Konglomerate von Pixeln mit dem Farbtonwert, der Borsten oder Borstenbüscheln (5) zugewiesen ist, die zu klein sind, um eine Borste oder ein Borstenbüschel (5) darzustellen, und Zuweisen der identifizierten Konglomerate von Pixeln zu dem Farbtonwert, der dem Hintergrund zugewiesen ist;
   - in einem fünften Schritt (154) Messen der Zirkularität aller Formen in dem Bild gemäß dem dritten Schritt oder dem vierten Schritt und Zuweisen aller Pixel von Formen in dem Bild, die eine Zirkularität unter einem vordefinierten Zirkularitätsschwellenwert aufweisen, zu dem Farbtonwert, der dem Hintergrund zugewiesen ist.

10. Verfahren nach Anspruch 9, wobei das Bild der von dem Rollball erreichbaren Oberfläche, die aus dem zweiten Schritt (151) von Anspruch 9 erhalten wurde, zum Bestimmen der Büschelintegrität gemäß Bewertungsverfahren (c) verwendet wird, umfassend mindestens den zweiten der folgenden Bewertungsschritte:

   - in einem ersten Bewertungsschritt (155), Umkehren des Bilds des vierten Schritts (153) oder fünften Schritts (154) von Anspruch 9 und Subtrahieren des umgekehrten Bilds von dem im zweiten Schritt (151) von Anspruch 9 erhaltenen Bild;
   - in einem zweiten Bewertungsschritt (156), Identifizieren lokaler Grauwertmaxima in dem im ersten Bewertungsschritt (155) erhaltenen Bild oder in dem im zweiten Schritt (151) von Anspruch 9 erhaltenen Bild und Zählen der Anzahl von Maxima.

11. Vorrichtung zum Quantifizieren eines Abnutzungsgrads eines Borstenfelds (3) einer Bürste (4) oder eines Bürstenkopfes, die bzw. der eine Vielzahl von Borstenbüschel (5) umfasst, die jeweils eine Vielzahl einzelner Borsten gruppieren, wobei die Borstenbüschel (5) über das Borstenfeld (3) verteilt sind, wobei die Vorrichtung Folgendes umfasst:

   - eine Kamera (2) zum Aufzeichnen mindestens eines Bilds des Borstenfelds (3);
   - eine Halterung (6) für die Bürste (4) oder den Bürstenkopf, die so an die Position des Borstenfelds (3) unter der Kamera (2) angepasst ist, dass die Aufzeichnungsrichtung parallel zur Achse der Borsten oder Borstenbüschel (5) einer unbenutzten Bürste (4), die in der Halterung (6) gehalten wird, ist;
   - mindestens eine Lichtquelle (7), die senkrecht zur Aufzeichnungsrichtung angeordnet ist; und
   - eine Prozessoreinheit, die zum Durchführen des Verfahrens nach einem der Ansprüche 1 bis 10 ausgelegt ist.

12. Vorrichtung nach Anspruch 11, wobei mindestens zwei Lichtquellen (7) senkrecht zur Aufzeichnungsrichtung angeordnet sind.

**13.** Vorrichtung nach Anspruch 12, wobei die mindestens zwei Lichtquellen (7) einander gegenüber entlang einer Achse senkrecht zur Aufzeichnungsrichtung angeordnet sind.

**14.** Vorrichtung nach einem der Ansprüche 11 bis 13, ferner umfassend Ablenkschutze (8), die zwischen der Bürste (4) und jeder der Lichtquellen (7) angeordnet sind, wobei die Ablenkschutze (8) so in der Aufzeichnungsrichtung verlaufen, dass der Teil der Bürste (4) oder des Bürstenkopfes, der die Borsten fixiert, vom Licht der Lichtquellen (7) abgeschirmt ist.

**15.** Vorrichtung nach Anspruch 14, wobei die Halterung (6) und die Ablenkschutze (8) einstückig mit einem u-förmigen Querschnitt gebildet sind, der eine Ablage zum Halten der Bürste (4) oder des Bürstenkopfes bildet.

**Revendications**

**1.** Procédé de quantification d'un niveau d'usure d'une zone de poils (3) d'une brosse (4) comprenant une pluralité de touffes de poils (5) groupant chacune une pluralité de poils uniques, lesdites touffes de poils (5) étant réparties sur la zone de poils (3), le procédé comprenant les étapes suivantes :

- enregistrement et stockage d'une image de la zone de poils (3) ;
- conversion de l'image en une image d'échelle de gris par l'utilisation d'un traitement d'image numérique et stockage de l'image d'échelle de gris ;
- conversion de l'image d'échelle de gris en au moins une image binarisée avec seulement deux valeurs de ton par l'utilisation d'un traitement d'image numérique, en attribuant de ce fait une valeur de ton aux poils et/ou touffes de poils (5) visibles dans l'image et l'autre valeur de ton à l'arrière-plan dans l'image ne présentant pas de poils ou touffes de poils, et stockage de l'image binarisée ;
- application d'au moins un des procédés d'évaluation suivants :

(a) la détermination de l'évasement géométrique de la zone de poils (3) en créant une image de contour à partir de l'image binarisée avec les pixels de contour de la zone de poils (3) et en utilisant les coordonnées des pixels de contour pour déterminer les largeur et longueur maximales de brosse de la zone de poils (3) et/ou en créant une enveloppe convexe enveloppant tous les pixels de contour et ayant la plus petite taille possible pour déterminer l'aire et la circonférence de la zone de poils (3) ;
(b) la détermination de la surface de filament de tous les poils visibles dans l'image en comptant les pixels dans l'image binarisée ayant ladite valeur de ton de l'image binarisée attribuée aux poils et/ou aux touffes de poils (5) ;
(c) la détermination de l'intégrité de touffe de poils dans l'image en comptant les touffes séparables dans l'image d'échelle de gris en identifiant des maximas locaux de valeur de gris dans l'image d'échelle de gris, éventuellement après séparation des touffes de poils (5) en soustrayant un masque d'image binarisée généré par la conversion de l'image d'échelle de gris en ladite au moins une image binarisée identifiant les touffes de poils (5).

- la comparaison des résultats dudit au moins un procédé d'évaluation appliqué à des données de référence d'une brosse inutilisée (4) et/ou de brosses utilisées (4) avec des niveaux d'usure déterminés pour classer le niveau d'usure de la zone de poils (3).

**2.** Procédé selon la revendication 1, dans lequel au moins deux des trois procédés d'évaluation (a), (b), (c) sont appliqués et dans lequel les résultats desdits au moins deux procédés d'évaluation (a), (b), (c) sont combinés dans la classification du niveau d'usure.

**3.** Procédé selon la revendication 1 ou 2, dans lequel l'image de la zone de poils (3) est enregistrée en utilisant un procédé de microscopie en champ sombre.

**4.** Procédé selon l'une quelconque des revendications précédentes, dans lequel une image à profondeur de champ élevée est enregistrée en enregistrant différentes images focalisées entre les poils avec la longueur la plus courte et les poils avec la longueur la plus élevée, et en combinant ces images en une image dans laquelle tous les poils sont focalisés.

**5.** Procédé selon l'une quelconque des revendications précédentes, dans lequel la conversion de l'image d'échelle de gris en une image binarisée comprend au moins une des étapes suivantes :

- dans une première étape (110), le réglage de tous les pixels de l'image d'échelle de gris ayant une valeur d'échelle de gris au-dessus d'un premier seuil de binarisation spécifié sur ladite valeur de ton attribuée aux poils et/ou touffes de poils (5) et le réglage de tous les pixels de l'image d'échelle de gris ayant une valeur d'échelle de gris en dessous du premier seuil de binarisation spécifié sur la valeur de ton attribuée à l'arrière-plan de l'image ;
- dans une étape facultative supplémentaire (111), l'utilisation de l'image de la première étape (110) en tant que masque et la soustraction du masque de l'image d'échelle de gris en donnant une image d'échelle de gris des poils, le renforcement du contraste de l'image d'échelle de gris des poils, et le réglage de tous les pixels de l'image d'échelle de gris des poils avec contraste renforcé ayant une valeur d'échelle de gris au-dessus d'un deuxième seuil de binarisation spécifié sur ladite valeur de ton attribuée aux poils et/ou touffes de poils (5) et le réglage de tous les pixels de l'image d'échelle de gris ayant une valeur d'échelle de gris en dessous du deuxième seuil de binarisation spécifié sur la valeur de ton attribuée à l'arrière-plan de l'image ;
- dans une deuxième étape (112), dans l'image créée dans la première étape (110) ou l'étape supplémentaire (111), l'identification des pixels, avec les valeurs de ton attribuées à l'arrière-plan, entourés de pixels attribués aux poils et/ou touffes de poils (5), et la conversion de ces pixels identifiés à la valeur de ton attribuée aux poils et/ou touffes de poils (5) ;
- dans une troisième étape (113), l'identification de conglomérats de pixels avec la valeur de ton attribuée aux poils et/ou touffes de poils (5) qui sont trop petits pour représenter un poil, et l'attribution aux conglomérats de pixels identifiés de la valeur de ton attribuée à l'arrière-plan, et éventuellement la répétition de la deuxième étape et de la troisième étape plusieurs fois.

6. Procédé selon l'une quelconque des revendications précédentes, dans lequel l'image binarisée et, en particulier, l'image binarisée selon la troisième étape (113) de la revendication 5, est utilisée pour déterminer l'évasement géométrique selon le procédé d'évaluation (a), comprenant les étapes d'évaluation suivantes :

- dans une première étape d'évaluation (114), l'exécution d'une érosion morphologique d'image de l'image binarisée en testant l'image binarisée avec un élément de structure prédéfinie et en attribuant la valeur de ton attribuée au poil et/ou aux touffes de poils (5) à un pixel couvert par le centre de l'élément de structure si l'élément de structure complet s'ajuste dans l'image binarisée ;
- dans une deuxième étape d'évaluation (115), la soustraction de l'image obtenue dans la première étape d'évaluation (14) de l'image binarisée ou de l'image d'échelle de gris et la réduction de l'image résultante à ses contours en utilisant une fonction de contour du traitement d'image numérique ;
- dans une troisième étape d'évaluation (116), le marquage de chaque pixel des contours en créant une image de contour avec les pixels marqués étant les pixels de contour de la zone de poils (3) ;
- dans une quatrième étape d'évaluation (117), les coordonnées des pixels de contour sont utilisées pour déterminer les largeur et longueur maximales de brosse de la zone de poils (3), et une enveloppe convexe enveloppant tous les pixels de contour et ayant la plus petite taille possible est créée pour déterminer l'aire et la circonférence de la zone de poils (3).

7. Procédé selon l'une quelconque des revendications précédentes, dans lequel la conversion de l'image d'échelle de gris en une autre image binarisée comprend au moins la première des étapes suivantes :

- dans une première étape (130), le réglage de tous les pixels de l'image d'échelle de gris ayant une valeur d'échelle de gris au-dessus d'un premier seuil de binarisation spécifié sur ladite valeur de ton attribuée aux poils et/ou touffes de poils (5) et le réglage de tous les pixels de l'image d'échelle de gris ayant une valeur d'échelle de gris en dessous du premier seuil de binarisation spécifié sur la valeur de ton attribuée à l'arrière-plan de l'image ;
- dans une deuxième étape (131), l'identification de conglomérats de pixels avec la valeur de ton attribuée aux poils et/ou touffes de poils (5) qui sont trop petits pour représenter un poil ou une touffe de poils (5) et l'attribution, aux conglomérats de pixels identifiés, de la valeur de ton attribuée à l'arrière-plan.

8. Procédé selon l'une quelconque des revendications précédentes, dans lequel l'image binarisée et, en particulier, l'image binarisée selon la deuxième étape (131) de la revendication 7, est utilisée pour déterminer la surface de filament selon le procédé d'évaluation (b), comprenant l'étape d'évaluation suivante (132) :

- le comptage de tous les pixels dans l'image binarisée ayant la valeur de ton attribuée aux poils et/ou touffes de poils (5).

9. Procédé selon l'une quelconque des revendications précédentes, dans lequel la conversion de l'image d'échelle de gris en une autre image binarisée comprend au moins les trois premières des étapes suivantes :

- dans une première étape (150), l'application d'un filtre médian avec un rayon de filtre déterminé à l'image d'échelle de gris en remplaçant chaque valeur de ton d'un pixel par une valeur de ton moyenne de tous les pixels dans le rayon central ;
- dans une deuxième étape (151), l'application d'un algorithme à bille roulante avec un rayon de bille approprié à l'histogramme des valeurs de courbe de ton de l'image reçue dans la première étape (150) et la création d'une image de la surface atteignable par la bille roulante ;
- dans une troisième étape (152), la binarisation locale de l'image obtenue dans la deuxième étape (151), en utilisant un rayon de binarisation de préférence de l'ordre du diamètre d'une touffe de poils d'une brosse inutilisée et un seuil de binarisation locale distinguant le pic au sein du rayon de binarisation par rapport à l'arrière-plan ;
- dans une quatrième étape (153), l'identification de tous les conglomérats de pixels avec la valeur de ton attribuée aux poils ou touffes de poils (5) qui sont trop petits pour représenter un poil ou une touffe de poils (5) et l'attribution, aux conglomérats de pixels identifiés, de la valeur de ton attribuée à l'arrière-plan ;
- dans une cinquième étape (154), la mesure de la circularité de toutes les formes dans l'image selon la troisième étape ou la quatrième étape, et l'attribution à tous les pixels de formes dans l'image ayant une circularité en dessous d'un seuil de circularité prédéfini de la valeur de ton attribuée à l'arrière-plan.

10. Procédé selon la revendication 9, dans lequel l'image de la surface atteignable par la bille roulante obtenue à partir de la deuxième étape (151) de la revendication 9 est utilisée pour déterminer l'intégrité de touffe selon le procédé d'évaluation (c), comprenant au moins la deuxième des étapes d'évaluation suivantes :

- dans une première étape d'évaluation (155), l'inversion de l'image de la quatrième étape (153) ou de la cinquième étape (154) de la revendication 9 et la soustraction de l'image inversée de l'image obtenue dans la deuxième étape (151) de la revendication 9 ;
- dans une deuxième étape d'évaluation (156), l'identification de maxima locaux de valeur de gris dans l'image obtenue dans la première étape d'évaluation (155) ou dans l'image obtenue dans la deuxième étape (151) de la revendication 9 et le comptage du nombre de maxima.

11. Dispositif de quantification d'un niveau d'usure d'une zone de poils (3) d'une brosse (4) ou tête de brosse comprenant une pluralité de touffes de poils (5) groupant chacune une pluralité de poils uniques, lesdites touffes de poils (5) étant réparties sur la zone de poils (3), le dispositif comprenant :

- une caméra (2) pour l'enregistrement d'au moins une image de la zone de poils (3) ;
- un support (6) pour la brosse (4) ou tête de brosse, conçu pour positionner la zone de poils (3) sous la caméra (2) de telle sorte que la direction d'enregistrement est dirigée parallèle à l'axe des poils ou touffes de poils (5) d'une brosse inutilisée (4) maintenue dans le support (6) ;
- au moins une source de lumière (7) disposée perpendiculairement à la direction d'enregistrement ; et
- une unité de processeur conçue pour exécuter le procédé selon l'une quelconque des revendications 1 à 10.

12. Dispositif selon la revendication 11, dans lequel au moins deux sources de lumière (7) sont disposées perpendiculaires à la direction d'enregistrement.

13. Dispositif selon la revendication 12, dans lequel lesdites au moins deux sources de lumière (7) sont disposées opposées l'une à l'autre le long d'un axe perpendiculaire à la direction d'enregistrement.

14. Dispositif selon l'une quelconque des revendications 11 à 13, comprenant en outre des caches de déflexion (8) disposés entre la brosse (4) et chacune des sources de lumière (7), les caches de déflexion (8) s'étendant de manière telle dans la direction d'enregistrement que la partie de la brosse (4) ou de la tête de brosse fixant les poils est protégée de la lumière des sources de lumière (7).

15. Dispositif selon la revendication 14, dans lequel le support (6) et les caches de déflexion (8) sont formés en une seule pièce avec une coupe transversale en forme de U formant un plateau pour maintenir la brosse (4) ou la tête de brosse.

Fig. 1

classification
according (a), (b), (c)

1-light wear    2-medium wear  3-heavy wear

Fig. 3

Fig. 2

EP 3 150 082 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. VAN NÜSS et al.** Investigation of wear in manual toothbrushes from different price categories. *Schweiz Monatsschr Zahnmed,* September 2010, vol. 120